# EUROPÄISCHE PATENTSCHRIFT

(11) **EP 0 826 535 B1**
(45) Veröffentlichungstag und Bekanntmachung des Hinweises auf die Patenterteilung: **06.08.2003**
(21) Anmeldenummer: 97113609.8
(22) Anmeldetag: 07.08.1997
(51) Int. Cl.: B60J 3/02

(54) **Sonnenblende für Fahrzeuge**
Sun visor for vehicles
Pare-soleil pour véhicules

(30) Priorität: 03.09.1996 DE 19635683
(43) Veröffentlichungstag der Anmeldung: 04.03.1998
(73) Patentinhaber: Johnson Controls Interiors GmbH & Co. KG, 42285 Wuppertal (DE)
(72) Erfinder: Viertel, Lothar, 66802 Altforweiler (DE); Welter, Patrick, 57730 La Chambre (FR)
(74) Vertreter: Hemmelmann, Klaus

(56) Entgegenhaltungen:
- EP-A- 0 090 157
- EP-A- 0 401 760
- EP-A- 0 562 085
- DE-B- 1 252 082
- DE-C- 4 427 445
- US-A- 3 035 864
- US-A- 5 409 285

## Beschreibung

Die Erfindung bezieht sich auf eine Sonnenblende für Fahrzeuge mit einem hohlen, als Blasformkörper ausgebildeten Sonnenblendenkörper, der eine annähernd rechteckige Form aufweist und in einem Eckbereich ein Lagergehäuse mit einer Lagerbohrung für die einendige Lagerung einer Sonnenblendenachse trägt, welche von einer vom Lagergehäuse aufgenommenen Rastfeder geklemmt wird.

Die DE 29 10 631 A1 zeigt eine Sonnenblende für Fahrzeuge mit einem blasgeformten Sonnenblendenkörper. In einem Eckbereich des Sonnenblendenkörpers ist ein Lagergehäuse mit einer Lagerbohrung ausgebildet. Die Sonnenblende nach der DE 29 10 631 A1 wurde auf einer Automobilmesse gezeigt, und zwar in einer durch eine Rastfeder und eine Sonnenblendenkörper-Umhüllung ergänzten Form. Bei der bekannten Sonnenblende wurde die Rastfeder sattelartig im Bereich des Lagergehäuses auf den Sonnenblendenkörper aufgesetzt, was eine Umhüllung des Sonnenblendenkörpers erforderlich macht. Zudem genügte die Festlegung der Feder nicht den technischen Anforderungen, so daß die Sonnenblende nach der DE 29 10 631 A1 nicht in Serie aufgelegt werden konnte.

Aus der gattungsgemäßen EP 0 562 085 B1 ist eine Sonnenblende mit einem blasgeformten Sonnenblendenkörper bekannt geworden, bei der ein Lagergehäuse durch eine Rückhaltefeder aus starkem Federstahl ersetzt wurde, die im Sonnenblendenkörper eingelagert ist. Eine Rückhaltefeder, die gleichzeitig die Funktion eines Lagergehäuses mit Lagerbohrung übernehmen soll, muß sehr groß dimensioniert werden, mit dem Nachteil, daß sie ein hohes Gewicht und hohe Material- und Herstellungskosten verursacht. Es versteht sich, daß bei einer einstückigen Lagergehäuse-Rückhaltefeder-Kombination gewisse Abstriche hinsichtlich der Funktion des Lagergehäuses und/oder der Rückhaltefeder gemacht werden müssen. Auch ist bei der Sonnenblende nach der EP 0 562 085 B 1 eine Umhüllung des Sonnenblendenkörpers mit Umhüllungsmaterial erforderlich, um Sicken oder dgl. abzudecken.

Der Erfindung liegt nun, ausgehend von einer Sonnenblende der eingangs genannten Art die Aufgabe zugrunde, diese mit einem vereinfachten Lagergehäuse für die Sonnenblendenachse und für die Halterung einer-Rastfeder auszustatten, wobei Lagergehäuse und Rastfeder kleine Abmessungen und geringes Gewicht aufweisen und derart am Sonnenblendenkörper angeordnet werden sollen, daß dieser nicht mehr notwendigerweise mit einem Umhüllungsmaterial verkleidet werden muß.

Zur Lösung dieser Aufgabe ist erfindungsgemäß vorgesehen, daß das Lagergehäuse ein erstes sowie ein zweites Paar von jeweils nebeneinander angeordneten und wechselseitig gekrümmten Halbschalen aufweist, die miteinander die Lagerbohrung für den in das Lagergehäuse eingreifenden Bereich der Sonnenblendenachse bilden, daß zwischen dem ersten und zweiten Paar von Halbschalen Verbindungsstege vorgesehen sind, an denen die die Verbindungsstege übergreifende Rastfeder festgelegt ist und daß sich an die Halbschalen des Lagergehäuses jeweils nach unten offene Gehäuseteile anschließen, welche senkrecht zueinander ausgerichtetete Wandungen in labyrinthförmiger Anordnung aufweisen, von denen jeweils äußere Wandungen mit Nietöffnungen versehen sind, parallel an den inneren Breitseiten des Sonnenblendenkörpers anliegen und vom Material des Sonnenblendenkörpers festgehalten sind, das die Nietöffnungen durchsetzt.

Durch diese erfindungsgemäßen Maßnahmen wird zunächst eine klare Funktionstrennung zwischen dem Lagergehäuse einerseits und der Rückhaltefeder andererseits erreicht, so daß diese Teile nur zur Erfüllung ihrer ureigenen Aufgabe ausgelegt werden brauchen. Das Lagergehäuse ist ein relativ kleines, leichtgewichtiges Bauteil, das sich als Blechformteil ebenso einfach und kostengünstig herstellen läßt wie auch, was bevorzugt vorgesehen ist, als Kunststoff-Spritzgußteil, wobei aufgrund der Lagergehäuse-Konfiguration auf aufwendige Schieber im Spritzguß-Werkzeug verzichtet werden kann. Das Lagergehäuse ist daher, selbst bei Einsatz hochwertiger Kunststoffmaterialien - in der Praxis ist Polypropylen vorgesehen - ein Pfennigartikel und trägt daher zur kostengünstigen Herstellung einer Sonnenblende bei. Dadurch, daß die Lagerbohrung durch Halbschalen definiert ist und die nach unten offenen Gehäuseteile labyrinthförmig gestaltet sind, kann das Lagergehäuse ohne Schieber gefertigt werden und erhält insbesondere eine hohe Stabilität. Die Stabilität wird durch die Nietöffnungen in keinster Weise beeinträchtigt, während die Nietöffnungen andererseits den Vorteil einer zuverlässigen Verankerung des Lagergehäuses im Sonnenblendenkörper bieten, wobei die Nietverbindung des Lagergehäuses durch beim Blasformen des Sonnenblendenkörpers in die Nietöffnungen fließendes Sonnenblendenkörpermaterials gebildet ist. Bei der Fertigung der Sonnenblende wird das Lagergehäuse zweckmäßigerweise vom Blasdorn einer Kunststoff-Blasmaschine aufgenommen und so in der Blasform positioniert, daß sich die Nietverbindung beim Blasformen des Sonnenblendenkörpers ohne irgendwelche zusätzlichen Manipulationen von selbst ergibt. Es versteht sich, daß das Lagergehäuse vor dem Einbringen in den Formhohlraum der Blasformmaschine mit der Rückhaltefeder zu bestücken ist. Hinsichtlich der Rückhaltefeder kann auf Ausführungsformen zurückgegriffen werden, die sich in der Praxis in hervorragender Weise bewährt haben. Insbesondere sollte eine Rückhaltefeder zum Einsatz kommen, wie sie in der EP 0 090 157 B1 beschrieben ist. Ein Sonnenblendenkörper der durch die Erfindung hergestellten Art weist eine glatte, unterbrechungsfreie Oberfläche auf, so daß dem Grunde nach, insbesondere bei Einsatz beliebig eingefärbter Kunststoffolien, auf eine Umhüllung des Sonnenblendenkörpers mit Umhüllungsmaterial verzichtet werden kann. Andererseits können natürlich die Sonnenblendenkörper auch in herkömmlicherweise umhüllt werden, falls dies von der Abnehmerschaft gewünscht wird.

Weitere zweckmäßige Ausgestaltungen und vorteilhafte Weiterbildungen der Erfindung sind in den Unteransprüchen angegeben.

Ein Ausführungsbeispiel der Erfindung wird im folgenden anhand der Zeichnungen näher erläutert, und es zeigen:
- Fig. 1: eine Sonnenblende in Ansicht,
- Fig. 2: einen Schnitt A - A nach Fig. 1,
- Fig. 3: ein Lagergehäuse der Sonnenblende,
- Fig. 4: einen Schnitt B - B nach Fig. 3,
- Fig. 5: eine Ansicht des Lagergehäuses in Pfeilrichtung C gesehen,
- Fig. 6: ein gegenüber Fig. 3 abgewandeltes Lagergehäuse,
- Fig. 7: einen Schnitt D - D nach Fig. 6,
- Fig. 8: den teilweise aufgebrochen dargestellten Endbereich der Sonnenblende,
- Fig. 9: einen Schnitt E - E nach Fig. 8 und
- Fig. 10: einen Schnitt F - F nach Fig. 8.

Die Sonnenblende besteht aus einem Sonnenblendenkörper 1, einer Sonnenblendenachse 2, die mit einem Endbereich in ein im Sonnenblendenkörper 1 eingelagertes Lagergehäuse 3 eingreift und mit dem anderen Endbereich von einem Lagerböckchen 4 aufgenommen ist sowie aus einem Gegenlagerböckchen (nicht gezeigt) zur lösbaren Halterung eines am Sonnenblendenkörper 1 ausgebildeten Gegenlagerstifts 5. Der Sonnenblendenkörper 1 ist ggf. auch mit einem lediglich strichpunktiert angedeuteten Spiegel 7 oder einer Spiegelbaueinheit, die auch eine elektrische Beleuchtungseinrichtung aufweisen kann, ausgerüstet.

Der Sonnenblendenkörper 1 ist als hohler Blasformkörper ausgebildet, wobei der Gegenlagerstift 5 einen einstückigen und materialeinheitlichen Bestandteil des Sonnenblendenkörpers 1 bildet. In einem Eckbereich des Sonnenblendenkörpers 1 ist das Lagergehäuse 3 eingelagert, und zwar innerhalb des Hohlraums 6, wobei unter eingelagert auch eine Verankerung zu verstehen ist.

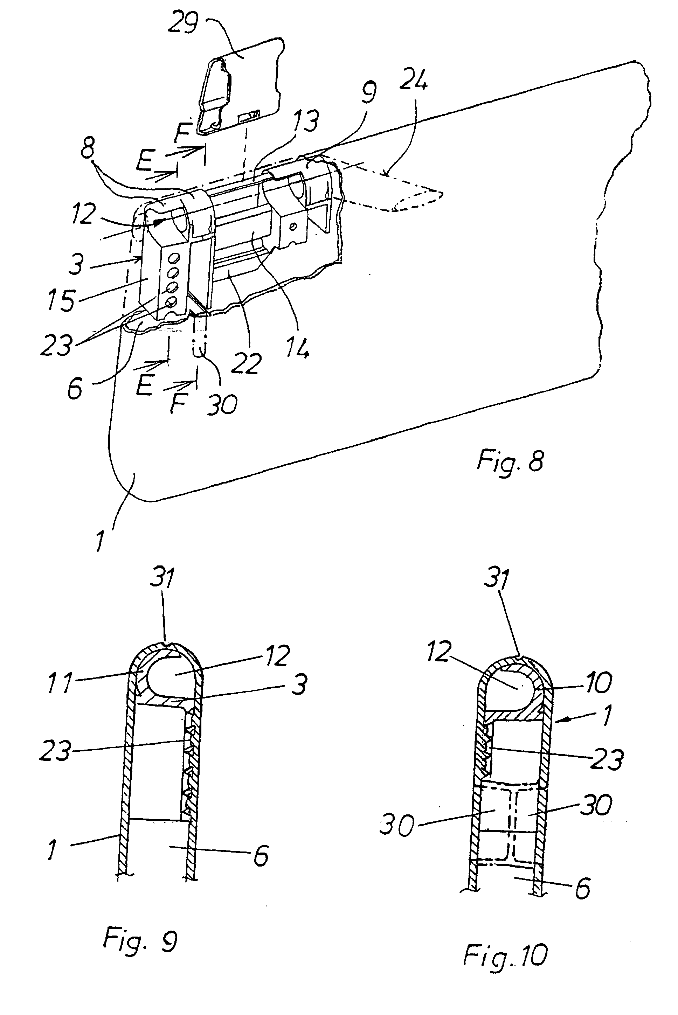

Das Lagergehäuse 3 weist ein erstes 8 sowie ein zweites Paar 9 von jeweils nebeneinander angeordneten und wechselseitig gekrümmten Halbschalen 10, 11 auf, die miteinander die Lagerbohrung 12 für den in das Lagergehäuse 3 eingreifenden Bereich der Sonnenblendenachse 2 bilden. In axialer Richtung sind die Halbschalen 10, 11 kopf- und bodenseitig aneinander gebunden. Zwischen dem ersten 8 und zweiten Paar 9 von Halbschalen 10, 11 sind Verbindungsstege 13, 14 vorgesehen, von denen der schmalere Verbindungssteg 13 kopfseitig und der breitere Verbindungssteg 14 fußseitig der Halbschalen 10, 11 angeordnet ist. An die Halbschalen 10, 11 schließen sich jeweils bodenseitig nach unten offene Gehäuseteile 15, 16 an, die senkrecht zueinander ausgerichtete Wandungen, die jeweils mit den Bezugszeichen 17 - 21 versehen sind, in labyrinthförmiger Anordnung aufweisen. Durch die labyrinthförmige Anordnung der Wandungen 17 - 21 erhalten die Gehäuseteile 15, 16 jeweils die Form eines Doppel-U-Körpers, was in Fig. 5 besonders deutlich gezeigt ist. Die Gehäuseteile 15, 16 sind einmal durch den Verbindungssteg 14 und einmal durch einen dazu parallel verlaufenden Versteifungssteg 22 miteinander verbunden. Die Wandungen 18, 20 eines jeden Gehäuseteils 15, 16 kommen in der Einbaulage des Lagergehäuses 3 an den Innenflächen der Sonnenblendenkörperbreitseiten (vgl. Fig. 8 bis 10) zur Anlage. Um eine unbedingt zuverlässige Verankerung zwischen dem Sonnenblendenkörper 1 und dem Lagergehäuse 3 zu erzielen, weisen die Wandungen 18, 20 der Gehäuseteile 15, 16 in Reihe neben- bzw. übereinander angeordnete Nietöffnungen 23 auf. Dadurch läßt sich beim Blasformen des Sonnenblendenkörpers 1 eine Nietverbindung durch in die Nietöffnungen 23 fließendes Sonnenblendenkörper-Material erzielen.

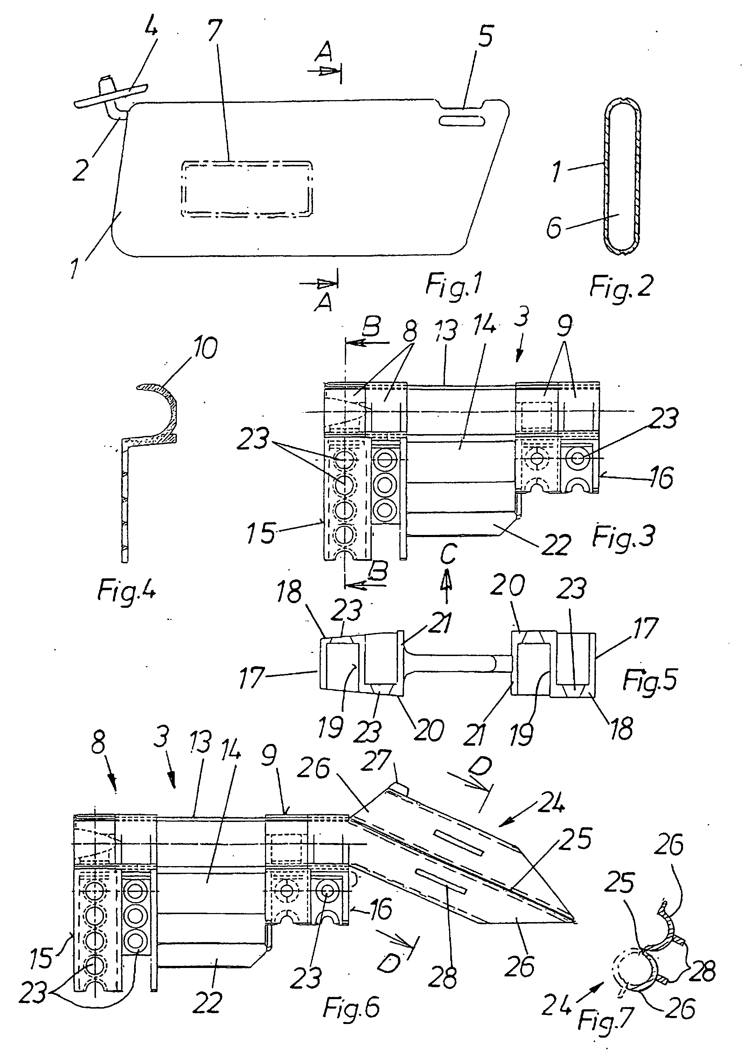

Die vorstehend beschriebene und in den Zeichnungen dargestellte Ausbildung des Lagergehäuses 3 erlaubt eine besonders einfache und kostengünstige Herstellung desselben im Kunststoff-Spritzguß-Verfahren. Das Spritzwerkzeug kann wegen der Halbschalen 10, 11 und der Labyrinthform der Gehäuseteile 15, 16 z. B. mit Bezug auf Fig. 3 und 6 senkrecht zur Zeichenebene geöffnet und geschlossen werden, so daß auf den Einsatz von Schiebern völlig verzichtet werden kann. Demgemäß besteht das Lagergehäuse 3 auch bevorzugt aus einem Kunststoff-Spritzgußteil.

Das Gehäuseteil 16 besitzt eine geringere Länge als das Gehäuseteil 15, und zwar aus dem Grunde, daß der Einbau eines Spiegels 7 oder einer Spiegelbaueinheit durch das Lagergehäuse 3 nicht behindert wird.

Das Lagergehäuse 3 nach Fig. 6 unterscheidet sich von dem nach Fig. 3 durch einen daran einstückig angeformten rohrförmigen Ansatz 24, der schräg nach unten geneigt ist und in eine an einer Breitseite des Sonnenblendenkörpers 1 ausgebildeten Vertiefung (nicht gezeigt) mündet. Damit für den rohrförmigen Ansatz 24 kein Schieber im Spritzguß-Werkzeug erforderlich wird, besteht der rohrförmige Ansatz 24 aus zwei durch ein Filmscharnier 25 miteinander verbundene Halbschalen 26, die aufeinandergeklappt (vgl. strichpunktierte Linien in Fig. 7) den rohrförmigen Ansatz 24 ergeben. Eine Verrastungshilfe 27 hält die Halbschalen 26 aneinander. An den Halbschalen 26 sind außenseitig Stege 28 angeformt, die sich an den inneren Breitseiten des Sonnenblendenkörpers 1 abstützen und diesen zusätzlich aussteifen. Der rohrförmige Ansatz 24 dient zum Durchführen von elektrischen Versorgungsleitungen, sofern der Sonnenblendenkörper 1 mit einer Vertiefung und einer darin eingesetzten, eine elektrische Beleuchtung aufweisenden Spiegelbaueinheit ausgerüstet werden soll, was recht häufig erwünscht ist.

Bevor das Lagergehäuse 3 im Sonnenblendenkörper 1 bei dessen Formgebungsverfahren verankert wird, ist eine Bestückung des Lagergehäuses 3 mit einer Rastfeder 29 vorgesehen. Die Rastfeder 29 wird über die Verbindungsstege 13, 14 gesetzt und hiernach mit ihren Schenkelenden in bekannter Weise verrastet. Durch die Verbindungsstege 13, 14 ist die Rastfeder 29 nach oben und unten unverschiebbar festgelegt. Ein seitliches Verschieben der Rastfeder 29 wird dadurch vermieden, daß der Abstand zwischen dem ersten 8 und zweiten Paar 9 der Halbschalen 10, 11, wie auch der Abstand zwischen den Gehäuseteilen 15, 16 entsprechend der Breite der Rastfeder 29 bemessen ist. Die Rastfeder 29 sitzt daher wackelfrei in einer käfigartigen Aufnahme, wodurch Knackgeräusche verhindert werden. Die Aufgabe und Funktion einer Rastfeder 29 für Sonnenblenden ist hinlänglich bekannt und braucht daher hier nicht mehr erläutert zu werden.

Es ist denkbar, das Lagergehäuse 3 zusätzlich zu sichern, und zwar durch sickenartige, sich gegenseitig abstützende Einprägungen 30 im Sonnenblendenkörper 1. Diese sickenartigen Einprägungen 30 sind in Fig. 8 und 10 mit strichpunktierten Linien angedeutet.

Das für die Herstellung des Sonnenblendenkörpers 1 zum Einsatz kommende Kunststoffmaterial kann beliebig eingefärbt sein, so daß es nicht zwingend erforderlich ist, den Sonnenblendenkörper 1 in herkömmlicher Weise mit Umhüllungsmaterial zu umhüllen. Umhüllungsmaterial kann insbesondere dann in Fortfall kommen, wenn der Sonnenblendenkörper 1 durch den Blasvorgang und entsprechende Vorbereitung des Formhohlraums der Blasmaschine von Hause aus eine Außenflächennarbung erhält. Solle doch eine Umhüllung gewünscht werden, hilft eine umlaufend am Sonnenblendenkörper 1 ausgebildete Hohlkehle 31 zur Aufnahme der Schweißnaht.

## Patentansprüche

1. Sonnenblende für Fahrzeuge mit einem hohlen, als Blasformkörper ausgebildeten Sonnenblendenkörper (1), der eine annähernd rechteckige Form aufweist und in einem Eckbereich ein Lagergehäuse (3) mit einer Lagerbohrung (12) für die einendige Lagerung einer Sonnenblendenachse (2) trägt, welche von einer vom Lagergehäuse (3) aufgenommenen Rastfeder (29) geklemmt wird, **dadurch gekennzeichnet, daß** das Lagergehäuse (3) ein erstes (8) sowie ein zweites Paar (9) von jeweils nebeneinander angeordneten und wechselseitig gekrümmten Halbschalen (10, 11) aufweist, die miteinander die Lagerbohrung (12) für den in das Lagergehäuse (3) eingreifenden Bereich der Sonnenblendenachse (2) bilden, daß zwischen dem ersten (8) und zweiten Paar (9) von Halbschalen (10, 11) Verbindungsstege (13, 14) vorgesehen sind, an denen die die Verbindungsstege (13, 14) übergreifende Rastfeder (29) festgelegt ist und daß sich an die Halbschalen (10, 11) des Lagergehäuses (3) jeweils nach unten offene Gehäuseteile (15, 16) anschließen, welche senkrecht zueinander ausgerichtete Wandungen (17, 21) in labyrinthförmiger Anordnung aufweisen, von denen jeweils äußere Wandungen (18, 20) mit Nietöffnungen (23) versehen sind, parallel an den inneren Breitseiten des Sonnenblendenkörpers (1) anliegen und vom Material des Sonnenblendenkörpers (1) festgehalten sind, das die Nietöffnungen (23) durchsetzt.

2. Sonnenblende nach Anspruch 1 **dadurch gekennzeichnet, daß** die Nietverbindung des Lagergehäuses (3) durch beim Blasformen des Sonnenblendenkörpers (1) in die Nietöffnungen (23) fließendes Sonnenblendenkörper-Material gebildet ist.

3. Sonnenblende nach Anspruch 1 oder 2 **dadurch gekennzeichnet, daß** das Lagergehäuse (3) als Kunststoff-Spritzgußteil ausgeführt ist.

4. Sonnenblende nach wenigstens einem der Ansprüche 1 bis 3, **dadurch gekennzeichnet, daß** die Gehäuseteile (15, 16) durch einen parallel zu den Verbindungsstegen (13, 14) verlaufenden Versteifungssteg (22) miteinander verbunden sind.

5. Sonnenblende nach wenigstens einem der Ansprüche 1 bis 4, **dadurch gekennzeichnet, daß** die Gehäuseteile (15, 16) unterschiedliche Länge aufweisen, wobei der der Einsteckseite der Sonnenblendenachse (2) zugewandte Gehäuseteil (15) länger ist.

6. Sonnenblende nach wenigstens einem der Ansprüche 1 bis 5 **dadurch gekennzeichnet, daß** das Lagergehäuse (3) hinterendig einen sich an die Lagerbohrung (12) anschließenden rohiförmigen Ansatz (24) trägt, der in eine an einer Breitseite des Sonnenblendenkörpers (1) ausgebildeten Vertiefung mündet.

7. Sonnenblende nach Anspruch 6, **dadurch gekennzeichnet, daß** der rohrförmige Ansatz (24) aus zwei durch ein angeformtes Filmscharnier (25) miteinander verbundenen Halbschalen (26) besteht.

8. Sonnenblende nach Anspruch 6 oder 7, **dadurch gekennzeichnet, daß** der rohrförmige Ansatz (24) miteinander diametral gegenüberliegenden Stegen (28) ausgebildet ist, die sich an den inneren Breitseiten des Sonnenblendenkörpers (1) abstützen.

9. Sonnenblende nach einem oder mehreren der Ansprüche 1 bis 8, **dadurch gekennzeichnet, daß** der Abstand zwischen dem ersten (8) und zweiten Paar (9) der Halbschalen (10, 11) wie auch der Abstand zwischen den nach unten offenen Gehäuseteilen (15, 16) entsprechend der Breite der Rastfeder 29 bemessen ist.

## Claims

1. Sun visor for vehicles having a hollow sun visor body (1) which is designed as a blow-moulded body and has an approximately rectangular shape and bears, in a corner region, a bearing housing (3) having a bearing hole (12) for the mounting, at one end, of a sun visor spindle (2) which is clamped in place by a latching spring (29) held by the bearing housing (3), **characterized in that** the bearing housing (3) has a first pair (8) and a second pair (9) of half shells (10, 11) which are in each case arranged next to each other and are curved alternately and with each other form the bearing hole (12) for that region of the sun visor spindle (2) which engages in the bearing housing (3), **in that** connecting webs (13, 14) are provided between the first pair (8) and second pair (9) of half shells (10, 11), on which the latching spring (29) engaging over the connecting webs (13, 14) is secured, and **in that** housing parts (15, 16) which are in each case open downwards are connected to the half shells (10, 11) of the bearing housing (3) and have walls (17, 21), which are aligned perpendicularly with respect to each other, in a labyrinth-shaped arrangement, of which the outer walls (18, 20) in each case are provided with rivet openings (23), bear parallel to the inner wide sides of the sun visor body (1) and are secured by the material for the sun visor body (1), which passes through the rivet openings (23).

2. Sun visor according to Claim 1, **characterized in that** the riveted connection of the bearing housing (3) is formed by material of the sun visor body flowing into the rivet openings (23) during the blow-moulding of the sun visor body (1).

3. Sun visor according to Claim 1 or 2, **characterized in that** the bearing housing (3) is designed as an injection-moulded plastic part.

4. Sun visor according to at least one of Claims 1 to 3, **characterized in that** the housing parts (15, 16) are connected to each other by a stiffening web (22) running parallel to the connecting webs (13, 14).

5. Sun visor according to at least one of Claims 1 to 4, **characterized in that** the housing parts (15, 16) differ in length, with the housing part (15) which faces the plug-in side of the sun visor spindle (2) being longer.

6. Sun visor according to at least one of Claims 1 to 5, **characterized in that** the bearing housing (3) bears, at the rear end, a tubular projection (24) which is connected to the bearing hole (12) and leads into a depression formed on a wide side of the sun visor body (1).

7. Sun visor according to Claim 6, **characterized in that** the tubular projection (24) comprises two half shells (26) which are connected to each other by a moulded-on film hinge (25).

8. Sun visor according to Claim 6 or 7, **characterized in that** the tubular projection (24) is formed by diametrically opposite webs (28) which are supported on the inner wide sides of the sun visor body (1).

9. Sun visor according to one or more of Claims 1 to 8, **characterized in that**, like the distance between the two downwardly open housing parts (15, 16), the distance between the first pair (8) and second pair (9) of half shells (10, 11) is dimensioned to correspond to the width of the latching spring (29).

## Revendications

1. Pare-soleil pour véhicules avec un corps de pare-soleil creux (1), sous forme d'un corps moulé par soufflage, qui présente une forme approximativement rectangulaire et qui porte dans une zone d'angle un corps de palier (3) avec un alésage de palier (12) pour le support par une extrémité d'un axe de pare-soleil (2), qui est pincé par une pince à ressort (29) logée dans le corps de palier (3), **caractérisé en ce que** le corps de palier (3) présente une première (B) ainsi qu'une deuxième paire (9) de demi-coquilles (10, 11) disposées l'une à côté de l'autre et incurvées en sens contraire, qui forment ensemble l'alésage de palier (12) pour la région de l'axe de pare-soleil (2) engagée dans le corps de palier (3), **en ce qu'**il est prévu entre la première (8) et la deuxième paire (9) de demi-coquilles (10, 11) des nervures de liaison (13, 14) sur lesquelles est fixée la pince à ressort (29) encadrant les nervures de liaison (13, 14), et **en ce qu'**à chaque demi-coquille (10, 11) du corps de palier (3) se raccordent des parties de corps (15, 16) ouvertes vers le bas, qui présentent, dans une disposition en labyrinthe, des parois (17, 21) orientées perpendiculairement l'une à l'autre, dont chaque paroi extérieure (18, 20) est pourvue de trous de rivets (23), est disposée parallèlement aux faces larges internes du corps de pare-soleil (1) et est fixée par la matière du corps de pare-soleil (1), qui traverse les trous de rivets (23).

2. Pare-soleil selon la revendication 1,
**caractérisé en ce que** l'assemblage rivé du corps de palier (3) est formé par la matière du corps de pare-soleil s'écoulant dans les trous de rivets (23) lors du moulage par soufflage du corps de pare-soleil (1).

3. Pare-soleil selon la revendication 1 ou 2, **caractérisé en ce que** le corps de palier (3) est une pièce en matière plastique moulée par injection.

4. Pare-soleil selon au moins une des revendications 1 à 3, **caractérisé en ce que** les parties de corps (15, 16) sont réunies l'une à l'autre par une nervure de renforcement (22) orientée parallèlement aux nervures de liaison (13, 14).

5. Pare-soleil selon au moins une des revendications 1 à 4, **caractérisé en ce que** les parties de corps (15, 16) présentent des longueurs différentes, la partie de corps (15) tournée vers le côté d'engagement de l'axe de pare-soleil (2) étant plus longue.

6. Pare-soleil selon au moins une des revendications 1 à 5, **caractérisé en ce que** le corps de palier (3) porte à son extrémité arrière un élément tubulaire (24) se raccordant à l'alésage de palier (12), qui débouche dans un creux formé dans une face large du corps de pare-soleil (1).

7. Pare-soleil selon la revendication 6, **caractérisé en ce que** l'élément tubulaire (24) se compose de deux demi-coquilles (26) assemblées l'une à l'autre par une charnière pelliculaire intégrée (25).

8. Pare-soleil selon la revendication 6 ou 7, **caractérisé en ce que** l'élément tubulaire (24) est pourvu de nervures (28) diamétralement opposées l'une à l'autre, qui s'appuient sur les faces larges internes du corps de pare-soleil (1).

9. Pare-soleil selon une ou plusieurs des revendications 1 à 8, **caractérisé en ce que** la distance entre la première (8) et la deuxième paire (9) de demi-coquilles (10, 11) ainsi que la distance entre les parties de corps (15, 16) ouvertes vers le bas est dimensionnée en fonction de la largeur de la pince à ressort (29).
